# EUROPEAN PATENT APPLICATION

(11) **EP 1 909 073 A1**
(43) Date of publication of application: **09.04.2008**
(21) Application number: 06743456.3
(22) Date of filing: 24.04.2006
(51) Int. Cl.: G01D 4/00, G08C 17/02, G05B 19/042

(54) **UNIVERSAL RECONFIGURABLE SYSTEM AND METHOD FOR THE REMOTE READING OF COUNTERS OR EQUIPMENT COMPRISING VISUAL INDICATORS**

(30) Priority: 25.04.2005 ES 200500991
(71) Applicant: SERVICIOS INFORMATICOS KIFER, S.L., E-20160 Lasarte-Oria (ES); UNIVERSIDAD DEL PAIS VASCO (UPV-EHU), E-48940 Leioa, Bizkaia (ES); SERVICIOS DE TXINGUDI, S.A., E-20303 Irun, Gipuzkoa (ES); UNIVERSIDAD AUTONOMA DE BARCELONA-UAB, E-08193 Bellaterra, Barcelona (ES); CSIC-CONSEJO SUP. INVEST. CIENTIFICAS, E-28006 Madrid (ES)
(72) Inventor: AYUSO RUBIO, Nestor, E-01013 Vitoria (ES); PICO MACHO, Jesus, E-48910 Sestao (ES); BENITEZ GALARZA, Nagore, E-20240 Ordizia (ES); CARRABINA BORDOLL, Jordi, E-25595 Llavor sí, Lleida (ES); PONS MONTSERRAT, Enric, E-08302 Matar (ES); MARTINEZ HUERTA, Borja, E-08172 Sant Cugat del Vallés (ES); CASTELLS RUFAS, David, E-08242 Manresa (ES); MONTON MACIAN, Marius, E-08004 Barcelona (ES); TERES TERES, Lluís, E-22589 Estopiñana del Castillo, Huesca (ES); MERINO PANADES, José, Luis, E-07015 Palma de Mallorca, Balears (ES); GONZÁLEZ BAZO, Enrique, E-20303 Irun (ES); GUERENDIAIN OLIVER, Alfonso, E-20009 Donostia, Gipuzkoa (ES); ALVAREZ BALBÁS, Gonzalo, E-20009 San Sebastian (ES); AMUCHASTEGUI URIARTE, Carlos, E-20010 San Sebastian (ES)
(74) Representative: Urteaga Simarro, José Antonio
(86) International application number: PCT/ES2006/000201
(87) International publication number: WO 2006/114462

(57) **Abstract**

System (1) for remotely reading a meter (5) or equipment fitted with data visual indicators (6), which is **characterized in that** it is based on the use of reprogrammable logic devices (9) and the fact that it can be remotely reprogrammed. These two features make the system (1) universal, i.e., suitable for all types of meters (5), and adjustable to all types of variations in the installation or operation conditions of the meter (5) or the system (1) itself. Methods for reconfiguration, image capture, etc. are defined, having in common that some actions are carried out in parallel, with the use of queues, therefore requiring a small number of (or low-capacity) data storage memory components.

## Description

### Field of the Invention

The invention relates to a system which automatically reads meters or equipment displaying data which can be read via a *display,* a revolving numeric indicator, or in general, any visual indicator, whereby this system automatically reads the visual indicator and transmits the read-out to a central unit or a remote billing unit.

### Prior Art

Since the emergence of important communication networks (Internet, intranets, etc.) and, particularly, since the arrival of wireless communication platforms capable of transferring data and supporting the aforementioned communication networks, significant advances are being made in the field of meter equipment for water, electricity and gas, etc., for both domestic and industrial use, as far as their reading is concerned. Up to now, meters had to be read manually, requiring the physical presence of a person in the exact location of the meter, this person being responsible for making a note of the data shown on the meter's *display* or visual indicator. Nowadays, the emergence of new information and communication technologies has enabled the reading of these meters to be conceived as a remote and automated action, with the corresponding reduction in costs, error risks in the read-out, and total reading time when reading a great amount of meters.

This new concept of remote meter reading was initially approached under the hypothesis that the traditional, locally and manually readable meters needed to be replaced with brand new meters, equipped with internal communication modules for their communication with a remote central read-out processing unit. However, bearing in mind that there were millions of traditional meters which had to be replaced, this option was not feasible for economic reasons.

Alternatively, the objective of obtaining remote meter readings has been approached under the hypothesis that the traditional meters could be maintained, in order to reduce the economic investment required. As a consequence, solutions have appeared in which a reading device is connected to the traditional meters. These solutions have a lower cost than those requiring a new meter with a communications module, able to automatically perform actions which were done manually up to now, or in other words, essentially read the meter's visual indicator, make a note of and communicate this reading to the read-out processing unit or billing unit.

Document WO-0148723-A1 describes a system and a method for the automatic wireless reading of metering equipment (meters). This system comprises a capturing device or module which is installed in a predetermined position on the meter and captures an image of this meter's visual indicator. Additionally, the system comprises a processing module which performs optical character recognition (OCR), i.e., analyzes the captured image and converts it into an alphanumeric code. The system also comprises a radiofrequency communication module which transmits this alphanumeric code to a central unit or billing unit.

The design presented in WO-0148723-A1 can be improved in certain aspects. In the first place, this design does not contemplate that the operation of the sensor module and the processing module can be changed or updated. Therefore, it is understood that, once manufactured, the system described in WO-0148723-A1 presents a unique operating method that is adapted to a specific type of meter, namely, the meter for which the system has been programmed. Therefore, if the meter which is read by the system needs to be replaced, or the lighting conditions or other external conditions of the meter change, or errors are detected in the programming of the system, or the system's OCR algorithm is replaced with a more advanced one, or in short, the operation of the system needs to be modified for any reason during the life of the system, this system must be physically replaced by another appropriate one.

In the second place, the processing module of WO-0148723-A1 is based on microprocessors and digital signal processors (DSP), which process instructions sequentially or in series, slowing down the image analysis process and requiring excessive transitional memory space, with the corresponding increase in the number of components and cost of the system.

An objective of the invention is to obtain an automatic meter reading system which is universal, or in other words, which is valid for all types of meters.

In this respect, an objective of the invention is also for this automatic reading system to guarantee that any changes in the meter conditions, the updating of the system's algorithms, or in general, the emergence of any condition that requires the operation of the system to be modified, does not mean that this system needs to be replaced or transferred nor do qualified personnel need to be called out to perform this modification.

Another objective of the invention is to obtain an automatic meter reading system which minimizes the number and/or capacity of memory required for the storage of data between operations.

### Detailed Description of the Invention

In order to achieve the aforementioned objectives, the invention defines a system that allows remote reading of meters, i.e. of equipment fitted with visual data indicators. The system is characterized by the ability to be reprogrammed remotely, making it universal or suitable for all types of meters, and adaptable to all types of variations in the installation or operating conditions of the meter or of the system itself.

The system according to the invention is based on a master-slave model, comprising a slave module installed on the meter which is capable of reading the meter's visual indicator and then transmitting this read-out to a master module. The master module is able to collect the read-outs and order the slave module to perform actions. In the preferred embodiment, the master module is a mobile unit covering a geographical area and collecting readings from different slaves. The master module sends the readings to a remote central unit which controls the billing and, in general, performs tasks which use the data from the meter readings. The communication between master and slave is wireless, via an ad-hoc connection or a standard private connection. However, different forms of the slave - master - remote central unit architecture are considered, such as, the remote central unit performing the functions of the master and communicating with the slaves via a public data network. In any case, the central unit and the communication protocol between the master and the central unit are beyond the scope of this invention.

The slave, installed alongside the meter, comprises a capture module which is responsible for capturing the image of the meter's visual indicator; a process module whose task, among others, is to recognise or carry out OCR of the image to obtain a code; a radiofrequency module or RF module for communication with the master; a power module for the electricity supply of the slave; and, preferably, a timer module which manages the periodic switching off of the slave in order to reduce its electricity consumption. To enable the master to univocally identify each slave and its corresponding read-out data, the slave has an associated identification code or ID which is stored in non-volatile memory.

The capture module according to the invention comprises a sensor which actually captures the image of the meter's visual indicator, and a lighting device, oriented towards the visual indicator, which provides the necessary lighting so that the image presents an acceptable quality and can be reliably processed by the OCR system. The lighting provided by the lighting device is programmable. Both the lighting device and the sensor are controlled by the process module.

The process module, in addition to carrying out the OCR (proper reading of the meter's visual indicator), is the module responsible for controlling the entire operation of the slave. In other words, it controls the operation of the capture module, the radiofrequency module and timer module. For this, the process module also manages a series of parameters which define the operation of the slave, such as the identification code or ID, the lighting parameters, parameters for generating internal image capture orders, slave listening mode parameters, sensor parameters, OCR parameters, communications protocol parameters, the date and time configuration of the slave, etc. The operation of these parameters will be explained later.

Additionally, the process module controls the communication protocol between slave and master. This protocol is implemented on the reprogrammable logic device. The protocol is partially, or even fully, reprogrammable, which means that it may be partially or fully replaced or updated. In any case, the protocol is bidirectional in order to support the system's operating methods according to the invention, as will be seen herein.

The process module according to the invention is based on the use of reprogrammable logic devices (FPGAs). The process module comprises a reprogrammable logic device (FPGA) and a non-volatile memory. The non-volatile memory stores the entire configuration representing the architecture and operation of the reprogrammable logic device (FPGA), and the programmable parameters which determine the operation of the slave, among other data. An FPGA-based solution, as known in electronics, is half-way between a pure *software* solution (based on microprocessors), which is functionally more flexible and has a lower cost and design complexity, and a customized, pure *hardware* solution, which undoubtedly offers a greater number of advantages but involves complex and costly ASIC design. In fact, the solution according to the invention may be considered the optimum solution for the automatic and remote meter reading application, in terms of the functional features it offers with respect to the cost and complexity of the design involved.

Among these features, the invention allows defining slave operating methods which could not be supported by a slave based on a *software* solution (having that the software solution were provided with a standard complexity and a reasonable number of components). This is due to the fact that the *hardware* processing according to the invention, in combination with the use of queues, allows functions to be performed by methods running in parallel. The invention therefore saves memory if compared to a *software* approach that implements the same functions, which requires a large amount of memory for the storage of data between instruction and instruction.

Another feature is the slave's capability to be reprogrammed. The reprogrammable logic device or FPGA presents an initial configuration, which can be completely or partially altered at any moment by the master, so that the slave may be adapted to a change of meter or other necessary modification or update. The communication protocol between the master and the slave includes the necessary commands to support reconfiguration.

The operating methods or processes of the system according to the invention are set out below.
A) The system comprises a method for capturing and processing image data, which is performed by the slave and is initiated either by an external order from the master or by an internal order from the slave's timer module. Internal orders are generated on specific dates, times or time intervals which are preferably set by the master via the aforementioned master-slave communications protocol.
B) The system comprises a method for transferring image data from the slave to the master. This method is initiated by the master, which can request that the slave sends the captured image, the alphanumeric code obtained as a result of the OCR, or both.
C) The system comprises a method of remote reprogramming, for the complete or partial reprogramming of the operation of the slave. This method is initiated by the master, who sends a reprogramming order including the new configuration data.
D) The system comprises a method of activating/deactivating the slave, the purpose of which is to reduce the energy consumption, keeping the slave deactivated (switched off) almost all the time. The slave is only activated periodically for a preferably programmable activation time interval, during which the slave checks whether there is a master nearby or if there is an internal capture order. The activation and deactivation of the slave is controlled by its permanently-powered timer module, which is programmed to activate the FPGA at certain intervals or on a specific date.
E) The system comprises a method of trimming the captured image prior to OCR. Related to this method, the slave stores some programmable parameters that allow choosing on which area of the captured image the process module is going to carry out the recognition or OCR. These parameters preferably comprise a set of initial coordinates and final coordinates to define a rectangle (however, any type of parameter capable of defining an area of an appropriate shape or size on a two-dimensional captured image is contemplated). Then, according to this method, the OCR is only performed on the selected part of the captured image, for which the process module previously trims the image according to these parameters. The process module could even trim the image automatically.

In order to enable the master and slave to carry out the aforementioned methods, or other actions such as modifying the programmable parameters of the slave, the bidirectional communication protocol between the master and the slave features a set of messages or commands. With regard to master-slave communication, the bidirectional protocol comprises a set of commands that the master is able to send to the slave, such as:
- writing (modifying) the slave's programmable parameters,
- reading (requesting) the slave's programmable parameters,
- sending a new system configuration,
- requesting the version of the current configuration,
- initializing the slave's modules, including the emptying of queues,
- switching the slave to deactivated mode,
- performing an image capture,
- requesting the captured image, the alphanumeric code obtained as a result of the OCR, or both.

### Description of the Figures

The details of the invention are appreciated in the accompanying figures, which do not intend to limit the scope of the invention:
- Figure 1 shows a block diagram of reprogrammable universal remote reading system in accordance with the invention.
- Figure 2 shows a block diagram of the initial configuration of a reprogrammable logic device or FPGA in accordance with the invention.
- Figure 3 shows a block diagram of the method of capturing and processing image data (method A).
- Figure 4 shows a block diagram of the method for transferring image data from the slave to the master (method B).

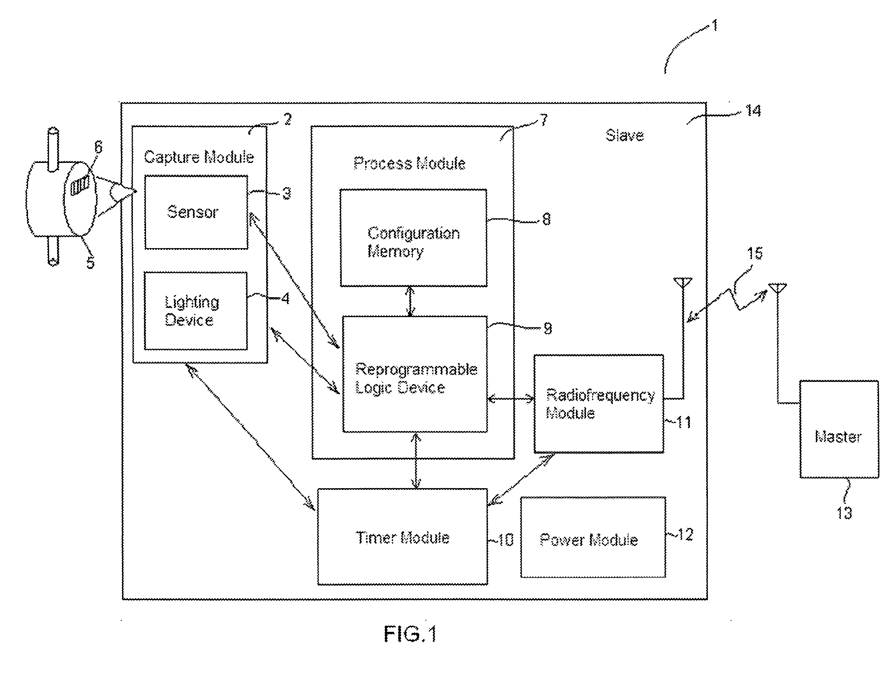

Figure 1 shows the reprogrammable universal remote reading system (1) according to the invention, which comprises a master (13) and a slave (14) communicated via a link (15), which is normally wireless. The slave (14) is installed next to a meter (5) which has a visual indicator (6). The slave (14) automatically reads the visual indicator (6) and sends the read-out to the master (13) following specific methods.

The slave (14) comprises a capture module (2) equipped with a sensor (3) and a lighting device (4). The sensor (3) captures the image of the visual indicator (6). The lighting device (4) provides adjustable/programmable lighting of the visual indicator (6) during the capture of the image. The slave (14) also includes a timer module (10), a power module (12), a radiofrequency module (11) and a process module (7). The process module (7) according to the invention is carried out by means of a reprogrammable logic device (9), or FPGA, whose configuration is stored in the configuration memory (8), which also stores other data such as the programmable parameters of the slave (14), i.e. the parameters that the master (13) can modify.

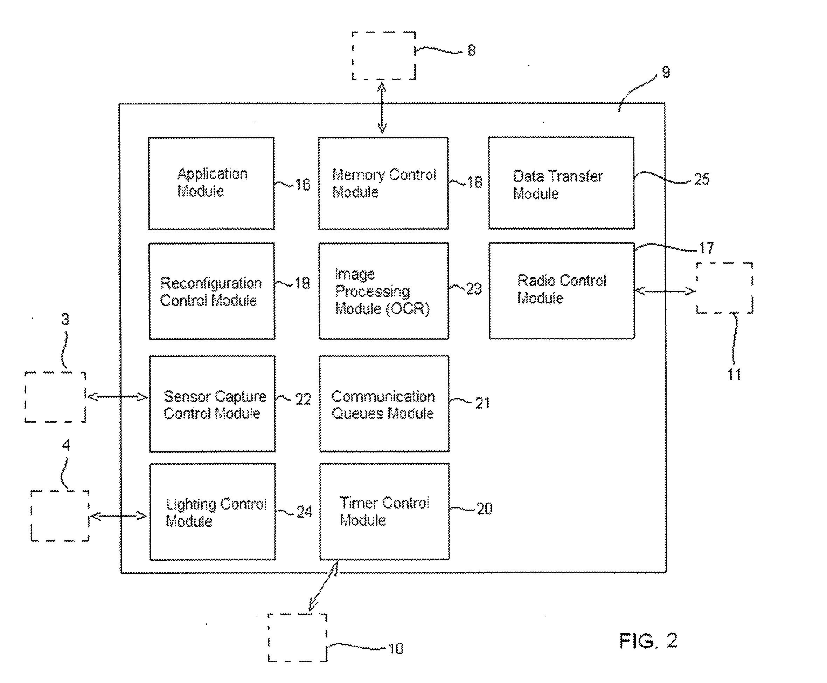

Figure 2 shows the initial configuration of the FPGA or reprogrammable logic device (9) of the process module (7) of the slave (14). This initial configuration can be fully or partially modified using method C, i.e. using method of remote reprogramming of the system (1). The initial configuration of the reprogrammable logic device or FPGA (9) comprises the following modules: an application module (16), responsible for taking control and decisions on high-level tasks; a reconfiguration control module (19), which controls and ensures the correct transfer of the reconfiguration data and the correct reconfiguration; a sensor capture control module (22), which controls the operation of the sensor (3); a lighting control module (24), which controls the operation of the lighting device (4); a data transfer module (25) and a radio control module (17), which implement the bidirectional master-slave protocol and control the operation of the radiofrequency module (11); an image processing module (23), which carries out the OCR processing of the captured image; a timer control module (20), which controls the operation of the timer module (10) and the timing of the slave (14) switching on and off; a memory control module (18), which controls the access to the configuration memory (8); a communication queues module (21), which comprises the queues for data transfer within the slave (14).

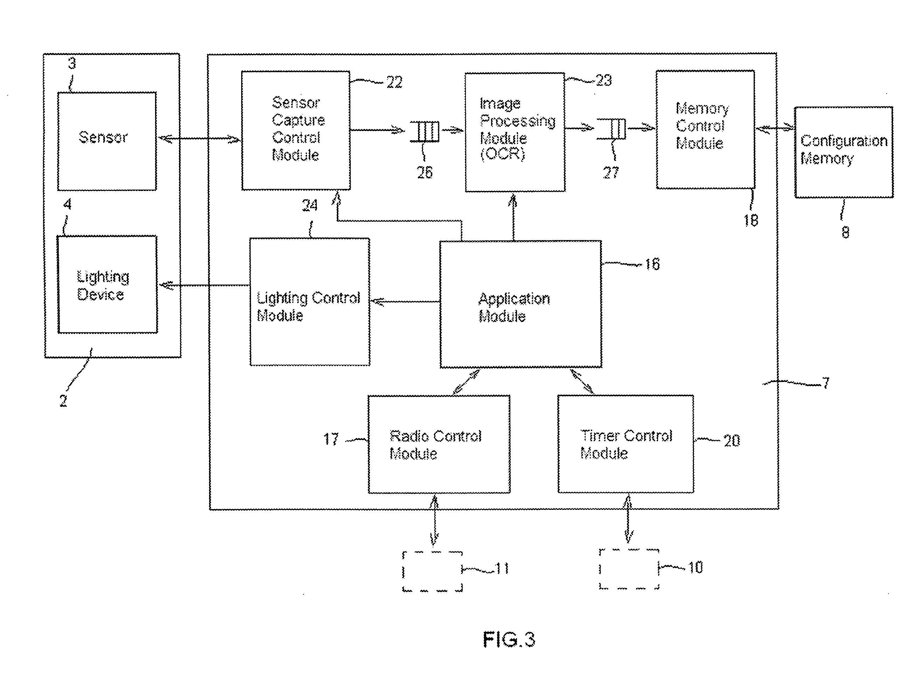

Figure 3 shows the method of capturing and processing an image. At the beginning of this method, the sensor capture control module (22) commands the sensor (3) to capture an image, and the lighting control module (24) activates the lighting device (4) according to the intensity and other characteristics defined by the lighting parameters. The sensor (3) captures the image and sends it to the sensor capture control module (22), which transfers the image to a data queue (26). When the captured image data begins to arrive at this data queue (26), the image processing module (23) begins to process the image and transfer the image data, via another data queue (27), to the non-volatile memory control module (18). Additionally, as soon as a digit is processed, the image processing module (23) transfers it to the non-volatile memory control module (18). In this way, four actions are performed in parallel: the transfer of the image from the capture module (2) to the process module (7), the OCR processing of the captured image in the process module (7), storage of the captured image in the process module (7), and storage of the alphanumeric code obtained as a result of OCR in the process module (7).

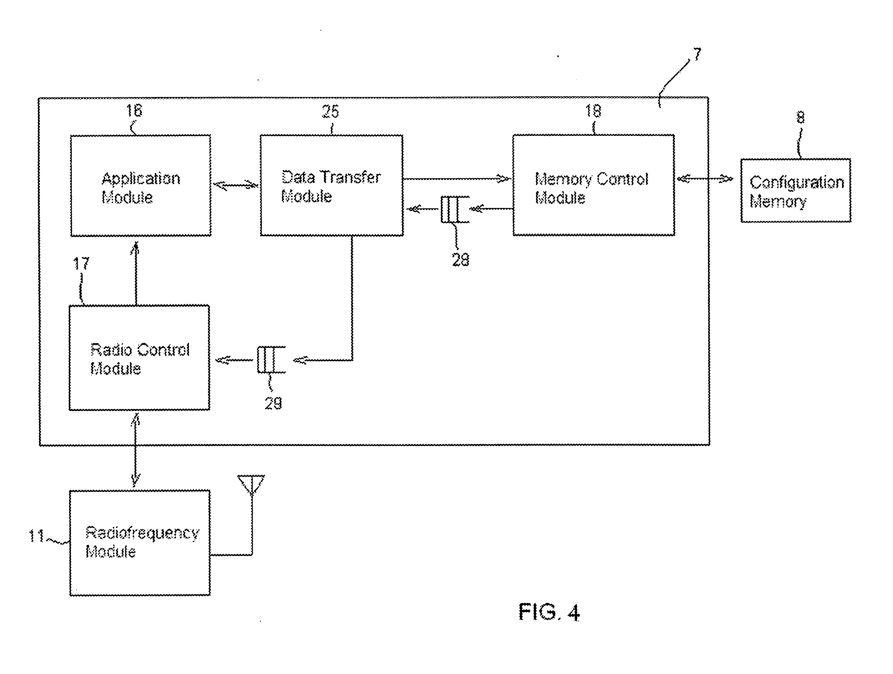

Figure 4 shows the method for transferring image data from the slave to the master. This method begins when the application module (16) of the slave receives a command form the master, requesting image data. At this moment, the application module (16) transfers the order to the data transfer module (25). Upon receipt of this order, the data transfer module (25) requests the corresponding data from the non-volatile memory control module (18). The data is transferred by the non-volatile memory control module (18) to a queue (28), from which it is extracted by the data transfer module (25) and sent, via another queue (29), to the radio control module (17). In this way, data extraction from the non-volatile memory (8) is carried out in parallel with its transfer to the radiofrequency module (11).

Other embodiments of the methods represented in Figures 3 and 4 are considered, including additional data queues to those represented in the figures.

The remote reprogramming method for the full or partial reconfiguration of the slave's operation begins when the slave's application module (16) receives the new system configuration order from the master. At this moment, the application module (16) transfers this order to the reconfiguration control module (19), which collects the reconfiguration data from a radio control module (17) queue and sends it to the memory control module (18) for storage in the configuration memory (8) of the process module. When all of the reconfiguration data has been received, the reconfiguration control module (19) reprograms the system.

The method of activating/deactivating the slave begins when the permanently-powered timer module (10) detects that the slave must enter into a period of activation and, in consequence, activates the FPGA. When this occurs, the timer control module (20) of the FPGA consults the reason for the activation with the timer module (10).

If the reason for the activation is an internal image capture order, the slave captures the image according to the method explained above.

If the reason for the activation is to switch to listening mode, the radiofrequency module (11) is activated and it enters a listening mode. After a certain listening time, which is preferably programmable, if no message is received from a master, the slave is deactivated until a new event occurs. On the other hand, if a message or order from a master is received during the time interval, the slave duly responds to this message in accordance with the corresponding method.

Upon completion of either action, the slave is deactivated.

## Claims

1. System (1) for the remote reading of a meter (5) fitted with at least one data visual indicator (6), whereby the system (1) comprises at least one slave (14) located close to the meter (5), and at least one master (13) which communicates with the slave via a link (15), where the master (13) can send orders to the slave (14) via a communications protocol on the link (15), whereby the slave (14) comprises a capture module (2) which includes at least one sensor (3) capable of capturing an image of the visual indicator (6), a process module (7) capable of carrying out an OCR of the captured image and obtain a code, a radiofrequency module (11), a power module (12) and, optionally, a timer module (10), which is **characterized in that**:
- the process module (7) comprises at least one reprogrammable logic device (9) and at least one non-volatile configuration memory (8), where the non-volatile configuration memory (8) stores the programmable parameters which determine the operation of the slave (14) and at least one complete configuration representing the architecture and the operation of the reprogrammable logic device (9), wherein
- the operation of the slave (14), including the communications protocol for communication with the master (13) and the configuration representing the architecture and the operation of the reprogrammable logic device (9), is partially or fully reprogrammable, for which the contents of the non-volatile configuration memory (8) may be partially or fully rewritten from the master (13) via the communications protocol.

2. System (1) for the remote reading of a meter (5) fitted with at least one data visual indicator (6), in accordance with claim 1, which is **characterized in that** the capture module (2) comprises a lighting device (4) that is adjustable in accordance with certain configurable lighting parameters stored in the slave (14).

3. System (1) for the remote reading of a meter (5) fitted with at least one data visual indicator (6), in accordance with claim 1, which is **characterized in that** the reprogrammable logic device (9) presents an initial configuration according to which the architecture of the reprogrammable logic device (9) comprises an application module (16), responsible for taking control and decisions on high-level tasks; a reconfiguration control module (19), which controls and ensures the correct transfer of the reconfiguration data and the correct reconfiguration; a sensor capture control module (22), which controls the operation of the sensor (3); a data transfer module (25) and a radio control module (17), which implement the bidirectional master-slave protocol and control the operation of the radiofrequency module (11); an image processing module (23), which carries out the OCR processing of the captured image; a timer control module (20), which controls the operation of the timer module (10) and the timing of the slave (14) switching on and off; a memory control module (18), which controls access to the configuration memory (8); a communication queues module (21), which comprises at least one data queue (26, 27, 28, 29) of the slave (14).

4. System (1) for the remote reading of a meter (5) fitted with at least one data visual indicator (6), in accordance with claims 2 and 3, which is **characterized in that** the initial configuration of the reprogrammable logic device (9) comprises a lighting control module (24), which controls the operation of the lighting device (4).

5. System (1) for the remote reading of a meter (5) fitted with at least one data visual indicator (6), in accordance with claim 1 or 3, which is **characterized in that** the slave (14) stores and controls programmable parameters which configure the operation of the slave (14), and which may be modified or read by the master (13) via the communications protocol.

6. System (1) for the remote reading of a meter (5) fitted with at least one data visual indicator (6), in accordance with claim 5, which is **characterized in that** the programmable parameters comprise at least some of the following parameters: at least one slave (14) identification code or ID, at least one parameter related to the timer module (10), at least one parameter related to the sensor (3), at least one OCR configuration parameter, at least one communications protocol configuration parameter, and at least one configuration parameter of the date and time of the slave (14).

7. System (1) for the remote reading of a meter (5) fitted with at least one data visual indicator (6), in accordance with claim 6, which is **characterized in that** the OCR configuration parameters comprise area selection parameters that allow choosing the area of the captured image on which the process module (7) must carry out the OCR processing.

8. System (1) for the remote reading of a meter (5) fitted with at least one data visual indicator (6), in accordance with claim 7, which is **characterized in that** the area selection parameters comprise initial coordinates and final coordinates defining a rectangle.

9. System (1) for the remote reading of a meter (5) fitted with at least one data visual indicator (6), in accordance with claim 2 or 4, which is **characterized in that** the programmable parameters comprise at least one lighting parameter, to control the operation of the lighting device (4).

10. System (1) for the remote reading of a meter (5) fitted with at least one data visual indicator (6), in accordance with claim 1, which is **characterized in that** the link (15) is an ad-hoc radio connection or a standard private radio connection.

11. System (1) for the remote reading of a meter (5) fitted with at least one data visual indicator (6), in accordance with claim 1, which is **characterized in that** the link (15) is a cellular or similar public wireless connection.

12. System (1) for the remote reading of a meter (5) fitted with at least one data visual indicator (6), in accordance with claim 3, which is **characterized in that** the communications protocol comprises at least one command or set of commands which enables the master (13) to read or write the configuration of the slave (14), to read the version information of the slave (14) configuration, to initialize the slave (14) modules, to switch the slave (14) to deactivation mode, to command an image capture, or to order the slave (14) to send image data.

13. Method of capturing and processing an image from a visual indicator (6) on a meter (5) or other equipment, comprising the communication of a slave module (14) close to the meter (5) and a master module (13), whereby the slave (14) comprises a timer module (10), a capture module (2), a process module (7) which includes a non-volatile memory (8), the method being **characterized in that** the condition which initiates the image capture is either an external order from the master (13) or an internal order from the timer module (10) of the slave (14) generated on a certain date or time or time interval, in such a way that when the slave (14) detects the presence of this condition, the following steps are carried out: the capture module (2) captures the image and delivers it to the process module (7), the process module (7) carries out OCR processing of the image to obtain a code, and stores the image and the code in the non-volatile memory (8), wherein the image delivery actions, OCR processing and storage of the image and the code are performed in parallel and through the use of queues.

14. Method of transferring image data from a visual indicator (6) on a meter (5) or other equipment, comprising the communication of a slave module (14) close to the meter (5) and a master module (13), whereby the slave (14) (14) comprises a radiofrequency module (11) for communication with the master (13), and a process module (7) which includes a non-volatile memory (8) that stores the visual indicator (6) data, the method being **characterized in that** the condition which initiates the image data transfer is an external order from the master (13), in such a way that when the slave (14) detects the presence of this condition, the following steps are carried out: the process module (7) extracts the visual indicator (6) data from the non-volatile memory (8) and delivers it to the radiofrequency module (11), who sends the data to the master (13), where the actions of extracting data from the non-volatile memory (8) and delivering data to the radiofrequency module (11) are performed in parallel and through the use of queues.

15. Method of remote reprogramming of a master-slave system (1) for the automatic reading of a visual indicator (6) on a meter (5) or other equipment, comprising the communication of a slave module (14) close to the meter (5) and a master module (13), whereby the slave (14) comprises a process module (7) that includes a non-volatile memory (8), the method being **characterized in that** the condition which initiates the reprogramming is an external order from the master (13), the external order including reconfiguration data, in such a way that when the slave (14) detects the presence of this condition, the following steps are carried out: the process module (7) extracts the reconfiguration data from the external order and stores it in the non-volatile memory (8), wherein the actions of extracting the reconfiguration data from the external order and storing the reconfiguration data in the non-volatile memory (8) are performed in parallel and through the use of queues, and wherein once the storage of the reconfiguration data in the non-volatile memory (8) has been completed, the slave (14) proceeds to be reconfigured.

16. Method of activating and deactivating a slave (14) of a master-slave system (1) for the automatic reading of a visual indicator (6) on a meter (5) or other equipment, comprising the communication of the slave module (14) close to the meter (5) and a master module (13), whereby the slave (14) comprises a power module (12), a permanently-powered timer module (10), a process module (7), usually not powered, the method being **characterized in that** the condition which initiates the activation is a specific type of internal order from the timer module (10), generated on dates, times or time intervals which may be programmed from the master (13), in such a way that when the slave (14) detects the presence of this condition, the following steps are carried out: the timer module (10) activates the process module (7) and informs said process module (7) of the specific type of internal order, the process module (7) executes a sub-method corresponding to the specific type of internal order, and upon completion of this sub-method, the process module (7) orders the switching off of the slave (14).

17. Method of activating and deactivating a slave (14) of a master-slave system (1) for the automatic reading of a visual indicator (6) on a meter (5) or other equipment, in accordance with claim 16, which is **characterized in that** the specific type of internal order is an internal order commanding to capture an image from the visual indicator (6) of the meter (5).

18. Method of activating and deactivating a slave (14) of a master-slave system (1) for the automatic reading of a visual indicator (6) on a meter (5) or other equipment, in accordance with claim 16, which is **characterized in that** the specific type of internal order is an internal order commanding to switch over to listening mode, in which the slave remains switched on and on standby for a programmable period, awaiting communication from the master (13).

19. Method of capturing and processing an image from a visual indicator (6) on a meter (5) or other equipment, in accordance with claim 13, which is **characterized in that** this method is carried out by a system in accordance with claim 3 and, in this method, the sensor capture control module (22) orders the sensor (3) to capture an image, the sensor (3) sends the captured image to the sensor capture control module (22), the sensor capture control module (22) transfers the image to a data queue (26), the image processing module (23) takes the captured image from the data queue (26), transfers the image to the non-volatile memory control module (18) via a data queue (27), carries out the OCR processing of this image to obtain an alphanumeric code, and transfers this alphanumeric code to the non-volatile memory control module (18), wherein four actions are carried out in parallel: the transfer of the image from the capture module (2) to the process module (7), OCR processing in the process module (7) of the captured image, storage of the captured image in the process module (7), and storage of the alphanumeric code obtained as a result of the OCR in the process module (7).

20. Method of capturing and processing an image from a visual indicator (6) on a meter (5) or other equipment, in accordance with claim 19, which is **characterized in that** this method is carried out by a system in accordance with claim 4, and in this method, the lighting control module (24) activates the lighting device (4).

21. Method of capturing and processing an image from a visual indicator (6) on a meter (5) or other equipment, in accordance with claim 20, which is **characterized in that** this method is performed by a system in accordance with claim 9, and, in this method, the lighting control module (24) activates the lighting device (4) according to the intensity and other characteristics defined in the lighting parameters.

22. Method of data transfer from a visual indicator (6) on a meter (5) or other equipment, in accordance with claim 14, which is **characterized in that** this method is carried out by a system in accordance with claim 3 and, in this method, the application module (16) of the slave (14) receives an order to send data from the master (13), the application module (16) transfers this order to the data transfer module (25), the data transfer module (25) requests the image data from the non-volatile memory control module (18), this data is transferred by the non-volatile memory control module (18) to a queue (28), from which it is extracted by the data transfer module (25) and sent, via another queue (29), to the radio control module (17), wherein the data extraction from the non-volatile memory (8) and the data transfer to the radiofrequency module (11) are performed in parallel.
